# EUROPEAN PATENT APPLICATION

(11) **EP 4 254 284 A1**
(43) Date of publication of application: **04.10.2023**
(21) Application number: 21897868.2
(22) Date of filing: 19.11.2021
(51) Int. Cl.: G06Q 10/08

(54) **SUPPLY METHOD DETERMINATION DEVICE**

(30) Priority: 24.11.2020 JP 2020194749
(71) Applicant: Hitachi Construction Machinery Co., Ltd., Tokyo 110-0015 (JP)
(72) Inventor: KANNO, Kousuke, Tsuchiura-shi, Ibaraki 300-0013 (JP); IWASAKI, Ayato, Tsuchiura-shi, Ibaraki 300-0013 (JP)
(74) Representative: MERH-IP Matias Erny Reichl Hoffmann Patentanwälte PartG mbB
(86) International application number: PCT/JP2021/042558
(87) International publication number: WO 2022/113894

(57) **Abstract**

Provided is a supply method determination device capable of shortening the lead time, reducing the cost, and determining whether it is better not to have inventory newly, while considering the use of manufacturing apparatuses such as 3D printers. A supply method determination device 401 of the present invention determines a supply base that supplies a product to an order base from among a plurality of bases and a supply method that supplies the product from the supply base to the order base. The supply method determination device calculates using inventory information 411 on the bases and 3DP holding base information 415 indicating which of the plurality of bases has a manufacturing apparatus: cost and lead time when transporting products from one of the bases where the product is in stock; and cost and lead time when manufacturing products at a base equipped with the manufacturing apparatus and transporting the products to the order base, and determines a supply base and a supply method.

## Description

### Technical Field

The present invention relates to a supply method determination device that acquires order information for maintenance parts of construction machine, for example, and determines the optimal supply method.

### Background Art

In the maintenance parts business for construction and mining machines, companies have inventory bases constructed in major regions of the world in response to the recent globalization of the business, and each inventory base manages an inventory of tens of thousands of items of maintenance parts. For instance, conventional inventory management methods for maintenance parts include those with a unidirectional supply chain structure that replenishes an inventory of maintenance parts only from a central depot to inventory bases around the world, and those that centrally manage the parts inventory held by each service base, and order and transfer parts among these service bases. Patent Literature 1 discloses a technique of determining the optimum means of transportation in consideration of transportation cost, inventory management cost, and lead time.

### Citation List

### Patent Literature

Patent Literature 1: JP 2017-182448 A

### Summary of Invention

### Technical Problem

Conventionally, technology has existed to manage the inventory at each inventory base by distributing products from a central depot to each inventory base or between inventory bases. Recent technological innovations have made it possible to manufacture some products using manufacturing apparatuses such as 3D printers. Utilization of these manufacturing apparatuses could lead to new options for inventory replenishment methods, not just distribution, but also manufacturing at service bases, including regional depots and distributors. In such a case, it is necessary to comprehensively evaluate and examine the lead time and cost between the conventional distribution and the manufacturing at service bases for ordering a product, and then determine the supply base and means of supply.

In view of the above, the present invention aims to provide a supply method determination device capable of shortening the lead time, reducing the cost, and determining whether it is better not to have inventory newly, while considering the use of manufacturing apparatuses such as 3D printers.

### Solution to Problem

To solve the above problems, a supply method determination device of the present invention is configured to determine a supply base that supplies a product to an order base from among a plurality of bases and determine a supply means that supplies the product from the supply base to the order base.

The supply method determination device stores inventory information indicating an inventory status of the product at the plurality of bases and manufacturing apparatus information indicating which of the plurality of bases has a manufacturing apparatus capable of manufacturing the product.

The supply method determination device calculates using the stored inventory information and manufacturing apparatus information: cost and lead time when transporting a predetermined number of the products from one of the plurality of bases where the product is in stock to the supply base; and cost and lead time when manufacturing a predetermined number of the products at a base equipped with the manufacturing apparatus among the plurality of bases and transporting the manufactured products to the order base, and determines a supply base and a supply means based on the calculated cost and lead time.

### Advantageous Effects of Invention

The supply method determination device according to the present invention is capable of shortening the lead time, reducing the cost, and determining whether it is better not to have inventory newly, while considering the use of manufacturing apparatuses such as 3D printers at the order base. Further features of the present invention will become apparent from the description of the specification and the accompanying drawings. Other problems, configurations and advantageous effects also will be clear from the following descriptions of the embodiment.

### Brief Description of Drawings

Fig. 1 shows an example of a supply chain that is a target of the supply method determination system in the present embodiment.
Fig. 2 shows a configuration of the supply method determination system in one embodiment of the present invention.
Fig. 3 is a block diagram showing the hardware configuration of the supply method determination device.
Fig. 4 is a block diagram showing the functions of the supply method determination device.
Fig. 5 shows an example of the inventory information.
Fig. 6 shows an example of the order information.
Fig. 7 shows an example of the transportation information.
Fig. 8 shows an example of the 3DP manufacturing information.
Fig. 9 shows an example of the 3DP holding base information.
Fig. 10 shows an example of the parts manufacturing information.
Fig. 11 shows an example of the score conversion information.
Fig. 12 shows an example of the weight information.
Fig. 13 is a flowchart explaining an example of processing executed by the calculation section of the supply method determination device.
Fig. 14 shows an example of a calculation sheet used in the calculation section.
Fig. 15 shows an example of the supply methods displayed on the display section at a service base where the order was placed.
Fig. 16 shows an example of the supply methods displayed on the display section at a service base where the order was placed.

### Description of Embodiments

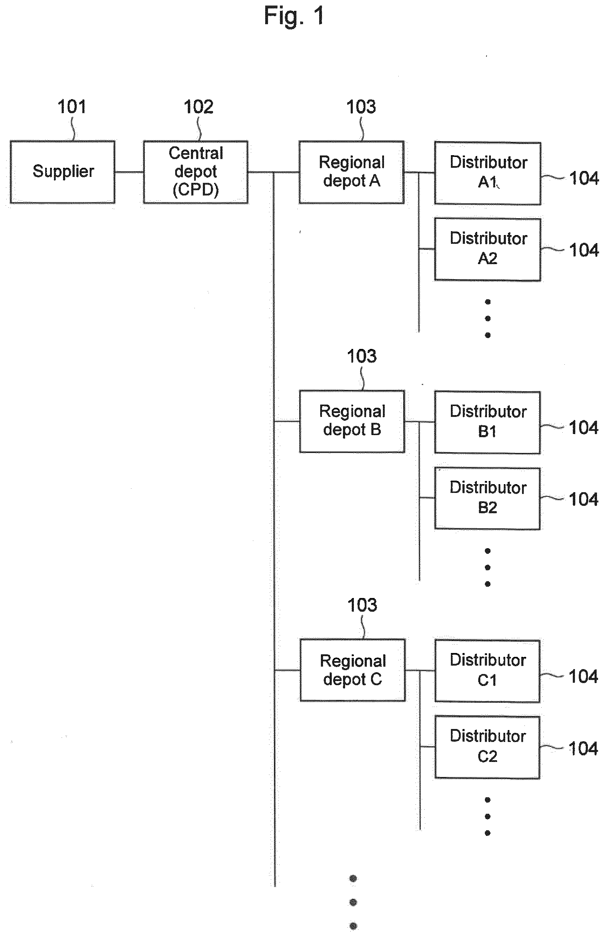

Referring to Figs. 1 to 16, the following describes a supply method determination system according to one embodiment of the present invention. The following embodiment describes an example of a system that determines a supply base and a supply means in a supply chain of the maintenance parts business for construction and mining machines, which is a supply method to replenish an inventory of the maintenance parts that are products handled in the supply chain.

Fig. 1 shows an example of a supply chain that is a target of the supply method determination system in this embodiment. The supply chain includes a supplier 101, a central depot (CPD) 102, multiple regional depots 103 and multiple distributors 104. In the following description, the central depot 102 and regional depots 103 may be referred to as a manufacturers, and the central depot 102, regional depots 103, and distributors 104 may be referred to as a service bases or bases.

The supplier 101 is a factory where maintenance parts are manufactured, for example, and corresponds to the manufacturer's own factory or another company's manufacturing factory. The supplier 101 has a function of manufacturing maintenance parts according to orders from manufacturers and delivering them to the central depot 102, which is a service base.

The central depot 102 is a base that holds an inventory of maintenance parts for construction and mining machines, for example, and is a global central base that has a large-scale inventory in the supply chain. The central depot 102 orders desired maintenance parts from the supplier 101, holds an inventory of the maintenance parts purchased from the supplier 101, receives orders from the regional depots 103, and supplies the maintenance parts to the regional depots 103 that are the service bases, from which the orders are placed. The central depot 102 functions as a wholesaler. The number of the central depot 102 is not limited to one and may be plural.

Like the central depot 102, the regional depots 103 are bases that hold an inventory of maintenance parts for construction and mining machines. They are bases with medium-sized inventories, and are located in several major regions of the globe, such as North America, South America, Europe, Africa, and Asia. The regional depots 103 have the function of ordering desired maintenance parts from the central depot 102 and other regional depots, the function as a primary depot of holding maintenance parts (as inventory) supplied from the central depot 102 and other regional depots, and the function of supplying maintenance parts to a distributor 104, from whom the order was received.

Like the central depot 102 and regional depots 103, the distributors 104 are bases that hold an inventory of maintenance parts for construction and mining machines. They are bases with small-sized inventories, and are located in regions and countries within the major regions, for example. The distributors 104 have the function as a secondary depot of holding an inventory of maintenance parts supplied from the regional depots 103 and other distributors 104, and the function as a service base that serves as a sales window for customer to sell maintenance parts in response to customers' orders.

In the above supply chain, any of a plurality of transportation means such as ships, planes, railroads, and trucks can be used for the transportation of maintenance parts between the plurality of service bases 102 to 104 (e.g., from the central depot 102 to the regional depots 103, from the regional depots 103 to the distributors 104, or between the regional depots 103 and between the distributors 104).

At least one of the plurality of service bases 102 to 104 has a 3D printer that is a manufacturing apparatus capable of manufacturing maintenance parts. In the above supply chain, the service base (order base) from which the order was received (hereinafter this may be referred to as an orderer) not only receives maintenance parts held in stock by other service bases through distribution, but also receive maintenance parts manufactured by 3D printers at other service bases. When a service base is equipped with a 3D printer capable of manufacturing desired maintenance parts, this service base may manufacture the parts by the 3D printer and sell them.

The 3D printers installed at multiple service bases 102 to 104 do not need to be the same model and may have different maintenance parts that can be manufactured. A known 3D printer can be used, which may be of a selective laser sintering type capable of manufacturing a metal object, for example. The data used by the 3D printer to form maintenance parts can be downloaded from a center server 301 and multiple service bases 102 to 104 via the internet or other communication networks.

The supply method determination system of this embodiment calculates the number of days and cost required to supply maintenance parts to an order base for each supply means in the supply chain of Fig. 1, and displays the result in a list format.

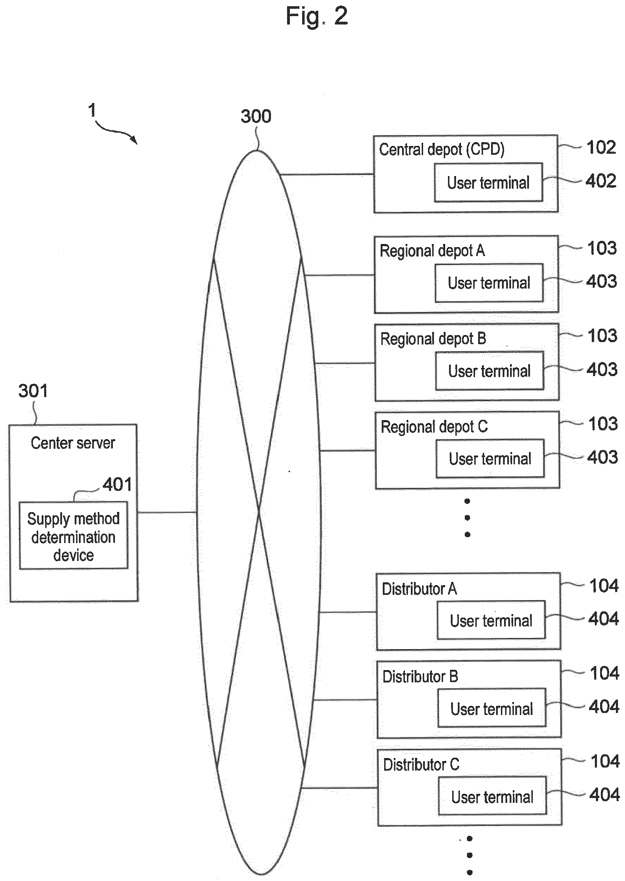

Fig. 2 shows the configuration of a supply method determination system including a supply method determination device according to the present embodiment. The supply method determination system 1 is configured to connect user terminals 402 to 404 located at service bases 102 to 104, respectively, and the center server 301 having a supply method determination device 401 with a communication network 300, and thus enables two-way communications between them.

The service bases 102 to 104 have a user terminal 402 located at the central depot 102, user terminals 403 each located at the corresponding regional depot 103, and user terminals 404 each located at the corresponding distributor 104. Through these user terminals 402 to 404, users are allowed to input order information for each maintenance part at each service base that is determined in the central depot 102, the regional depots 103, or the distributors 104.

When order information is input from at least one of the user terminals 402 to 404, the supply method determination device 401 calculates the inventory replenishment cost at the order base for each maintenance part and supply route based on the input order information. Then, the supply method determination device 401 searches for a supply base and a supply means, which are the supply method at the time of inventory replenishment, based on the calculation result. The supply method determination device 401 has the function of calculating and outputting the cost and lead time required to replenish maintenance parts at the order base for each supply method. Information on the supply methods calculated by the supply method determination device 401 is transmitted from the supply method determination device 401 at the center server 301 to the user terminal at the order base. The display section of the user terminal at the order base displays the information on the plurality of supply methods in a list format. Once the user operates the user terminal at the order base to select a supply method that meets the needs from the supply methods, the user terminal at the order base transmits information to place an order for maintenance parts to the user terminal at the selected supply base. The information to place an order for maintenance parts includes information on the supply means selected by the orderer. The information to place an order for maintenance parts is stored in the supply method determination device 401 at the center server 301. Receiving the order information from the user terminal at the order base, the service base of the supplier (supply base) supplies the maintenance parts to the order base using the supply means displayed on its own user terminal.

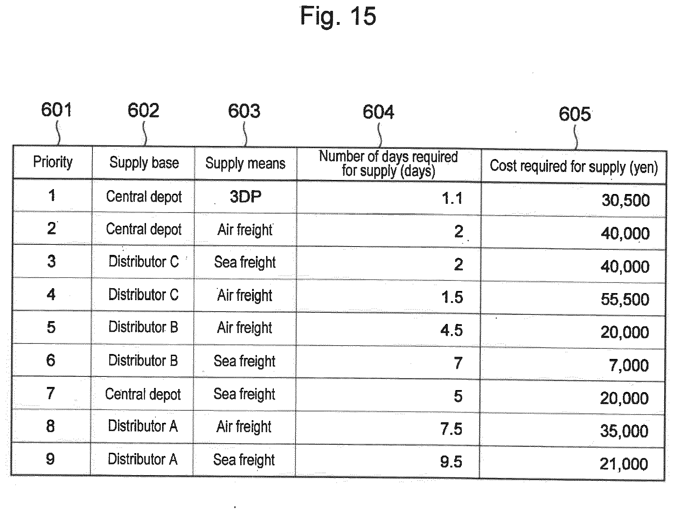

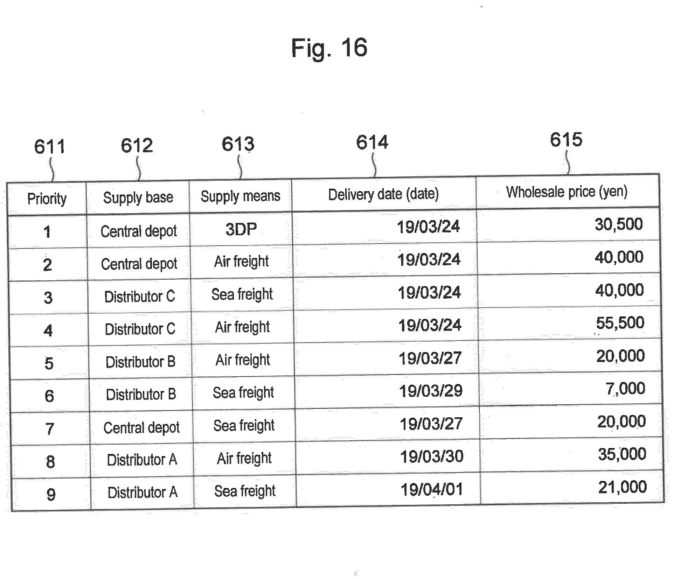

The user terminals 402 to 404 each have an input section that receives an input from the user and a display section that displays information such as the supply method. For instance, the input section of the user terminal is a keyboard, touch panel, or mouse, and the display section of the user terminal is a liquid crystal display. The user inputs order information to their user terminals 402 to 404 using the input section. The display section of the user terminal displays the result calculated by the supply method determination device 401, that is, the information on the supply bases and supply means (see Figs. 15 and 16), which is the recommended supply methods.

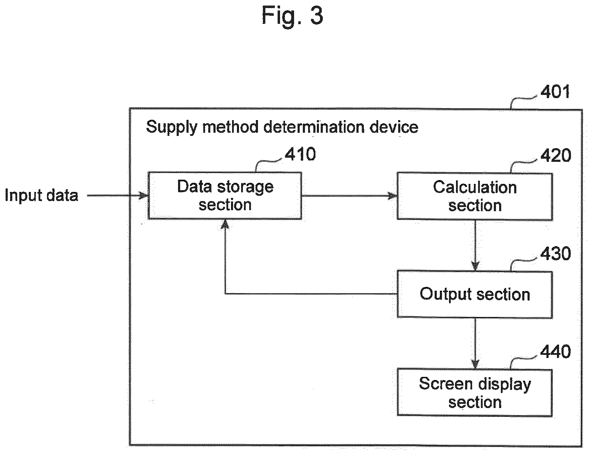

Fig. 3 is a block diagram showing the hardware configuration of the supply method determination device.

The supply method determination device 401 includes: a data storage section 410 that stores data input from user terminals at order bases; a calculation section 420 that performs predetermined arithmetic processing based on the data stored in the data storage section 410; an output section 430 that records the results of the operations performed by the calculation section 420 in the data storage section 410 and passes the information to a screen display section 440; and the screen display section 440 that displays the information output from the output section 430 on the screen.

The data storage section 410 is a non-volatile memory or a magnetic disk. The calculation section 420 includes a CPU, a ROM, and a RAM. The CPU of the calculation section 420 develops the program stored in the ROM into the RAM for execution, thereby executing the process of determining supply methods. The output section 430 includes a video output circuit and a data write circuit. The functions implemented by these circuits may be replaced with software.

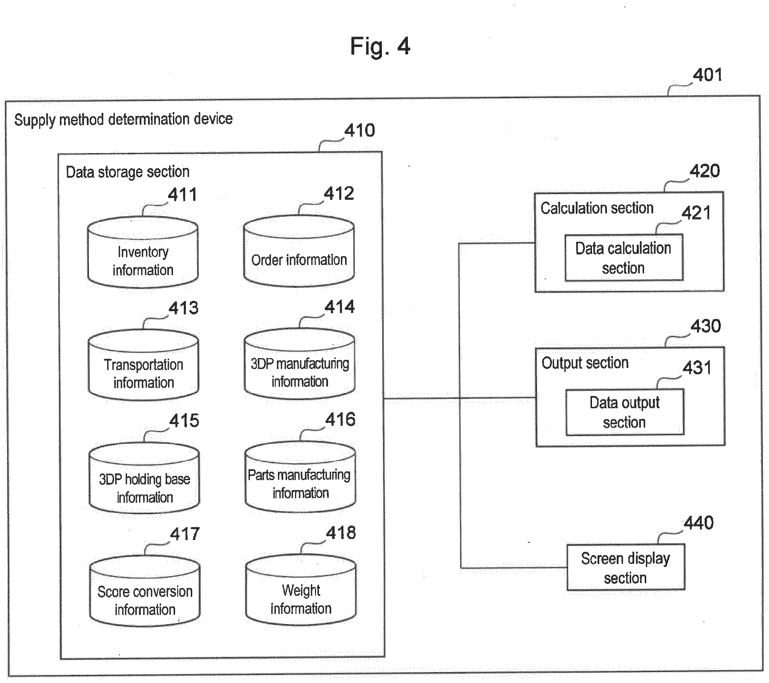

As shown in Fig. 4, the calculation section 420 includes a data calculation section 421 that calculates supply bases, supply means, supply days, and supply cost based on the data held by the data storage section 410, and presents the data on supply bases and supply means as recommended supply methods.

The output section 430 includes a data output section 431 that outputs data on the recommended supply methods, which is a result calculated by the data calculation section 421. The data output section 431 causes the data storage section 410 to store the calculation result by the calculation section 420. The data output section 431 outputs the information stored in the data storage section 410 to the screen display section 440 and also to the user terminals 402 to 404 at the order base and the supply base. Information is output to the user terminals 402 to 404 via the communication network 300.

The screen display section 440 performs processing of displaying information on the supply methods calculated by the calculation section 420 on the monitor screen of the supply method determination device 401. The supply methods, which are the calculation result by the calculation section 420, include information on the recommended supply bases and supply means for the order base, and the center server 301 can also confirm the result.

Fig. 4 is a block diagram showing the functions that the supply method determination device has.

As shown in Fig. 4, the data storage section 410 stores inventory information 411, order information 412, transportation information 413, 3DP manufacturing information 414, 3DP holding base information 415, parts manufacturing information 416, score conversion information 417, and weight information 418.

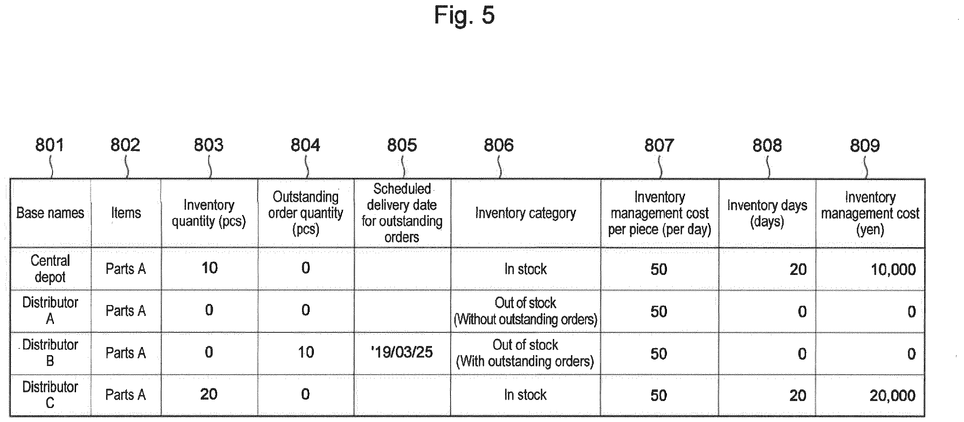

Fig. 5 shows an example of the inventory information 411.

The inventory information 411 indicates the inventory status of products, and includes information indicating the inventory quantity of maintenance parts at each base. The inventory information 411 includes the fields of base names 801, items 802, inventory quantity (pcs) 803, outstanding order quantity (pcs) 804, scheduled delivery date for outstanding orders 805, inventory category 806, inventory management cost per piece 807, inventory days 808 and inventory management cost 809. The field of base names 801 contains the names of bases, and the field of items 802 contains information such as the names and numbers of the maintenance parts. The field of inventory quantity (pcs) 803 contains information on the number of maintenance parts in stock at the bases, the field of outstanding order quantity (pieces) 804 contains information on the number of outstanding maintenance parts required at the bases for their orders, and the field of scheduled delivery date for outstanding orders 805 contains information on the scheduled date when the maintenance parts required at the bases will be received. If the outstanding order quantity is 0, the field of the scheduled delivery date for outstanding orders 805 will be blank.

The field of inventory category 806 contains information on whether the maintenance parts in question are in stock or not, and if they are not in stock, it also contains information on whether there is no outstanding order or whether there is an outstanding order. The field of inventory management cost per piece 807 contains information on the inventory management cost (yen) required to store one maintenance part in question for one day. The field of inventory days 808 contains information on the number of days that have passed since the maintenance part was received, and the field of inventory management cost 809 contains information on the total cost required to manage all the maintenance parts in inventory, and the information is a value calculated by multiplying the number of the maintenance parts in stock, the inventory management cost per piece and the number of days in stock.

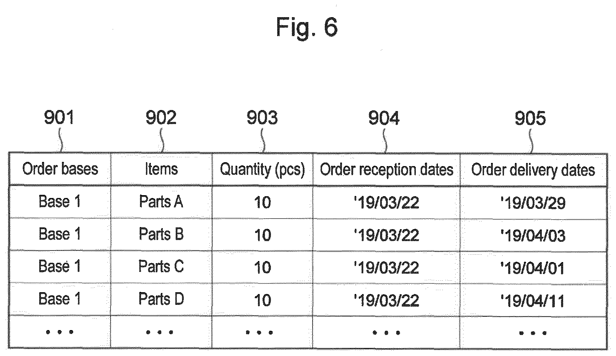

Fig. 6 shows an example of the order information 412.

The order information 412 contains information representing the number of orders for maintenance parts from any of a plurality of bases. The order information 412 includes the fields of order bases 901, items 902, quantity 903, order reception dates 904, and order delivery dates 905. The information stored in each of these fields is set based on the contents of the order each time a user places an order for maintenance parts from one of the bases. The field of order bases 901 contains information on the name of the base that placed the order and a code number indicating the name of the base. The field of items 902 contains the item or name of the maintenance part to be ordered. The field of quantity 903 contains the quantity of maintenance parts ordered. The field of order reception dates 904 contains information on the date when the order was accepted. The field of order delivery dates 905 contains the delivery date of the maintenance part specified in the order.

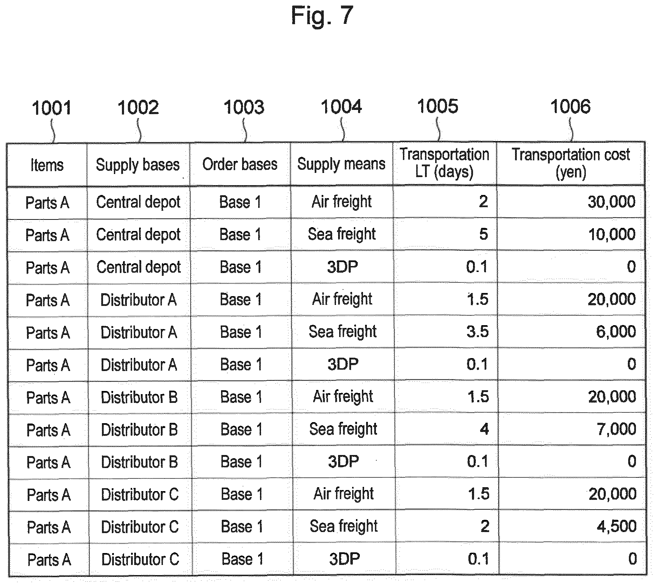

Fig. 7 shows an example of the transportation information 413.

The transportation information 413 includes information on the transportation costs required when transporting the maintenance part from each base to the order base, and is stored separately for each means of transportation such as air freight, sea freight, and transportation. The transportation information 413 includes the fields of items 1001, supply bases 1002, order bases 1003, supply means 1004, transportation LT 1005, and transportation cost 1006. The field of items 1001 contains the items of the maintenance parts to be transported, that is, the names of the maintenance parts. The field of supply bases 1002 contains the names of the bases from which the maintenance parts are supplied. The field of order bases 1003 contains the names of the service bases from which the maintenance parts are ordered.

The field of supply means 1004 contains information on the means of supplying the maintenance parts, such as air freight, sea freight, or manufacturing using a 3D printer (3DP). The field of transportation LT (days) 1005 contains the lead time, i.e., the number of days, when transporting the maintenance part from the supply base to the order base by the method stored in the field of supply means. The field of transportation cost 1006 contains the cost (yen) when transporting the item stored in the field of items 1001 from the supply base to the order base by the supply means stored in the field of supply means 1004.

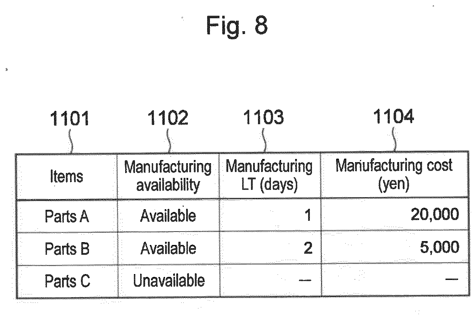

Fig. 8 shows an example of the 3DP manufacturing information 414.

The 3DP manufacturing information 414 includes the fields of items 1101, manufacturing availability 1102, manufacturing LT 1103, and manufacturing cost 1104. The field of items 1101 contains the items of maintenance parts to be manufactured by 3D printer, that is, the names of the maintenance parts. The field of manufacturing availability 1102 contains information on whether or not the maintenance part can be manufactured by the 3D printer. The field of manufacturing LT 1103 stores the manufacturing lead time, i.e., the number of manufacturing days, when the maintenance part is manufactured by the 3D printer. The field of manufacturing cost 1104 contains the cost (yen) of manufacturing the maintenance part by the 3D printer. The 3DP manufacturing information 414 is stored separately for each type of 3D printer.

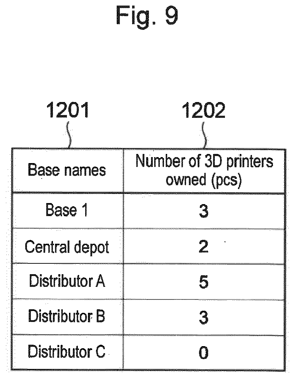

Fig. 9 shows an example of the 3DP holding base information 415.

The 3DP holding base information 415 includes information on the bases holding 3D printers and the number of 3D printers owned by the bases. The 3DP holding base information 415 includes the fields of base names 1201 and the number of 3D printers owned 1202. The field of base names 1201 contains the names of the bases that own the 3D printers. The field of the number of 3D printers owned 1202 stores information on the number of 3D printers owned by the bases.

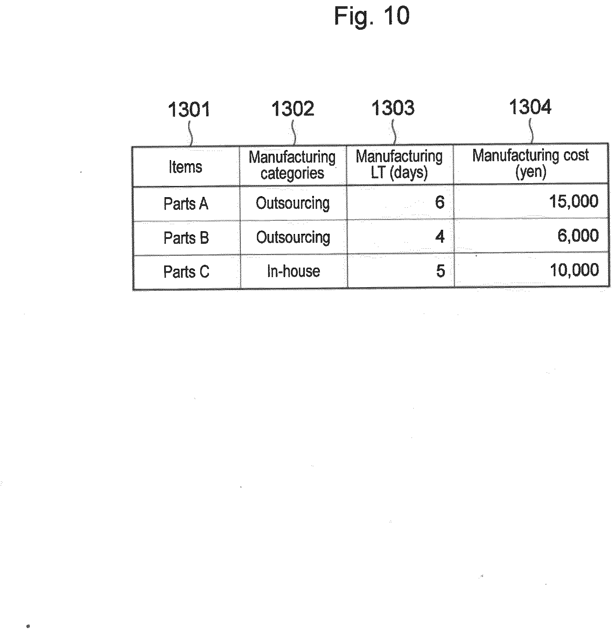

Fig. 10 shows an example of the parts manufacturing information 416.

The parts manufacturing information 416 includes information on the manufacturer that manufactures the maintenance parts and information on the lead time when the manufacturer manufactures the maintenance parts. The parts manufacturing information 416 includes the fields of items 1301, manufacturing categories 1302, manufacturing LT 1303, and manufacturing cost 1304. The field of items 1301 contains the items of maintenance parts to be manufactured by 3D printer, that is, the names of the maintenance parts. The field of manufacturing categories 1302 contains information on whether the maintenance part will be subcontracted to an outside vendor or manufactured in-house. The field of manufacturing LT 1103 stores the manufacturing lead time, i.e., the number of days, when the maintenance part is manufactured by outsourcing or in-house. The field of manufacturing cost 1304 contains the cost (yen) of manufacturing the item stored in the field of items 1301 by outsourcing or in-house production as specified in the manufacturing categories 1302.

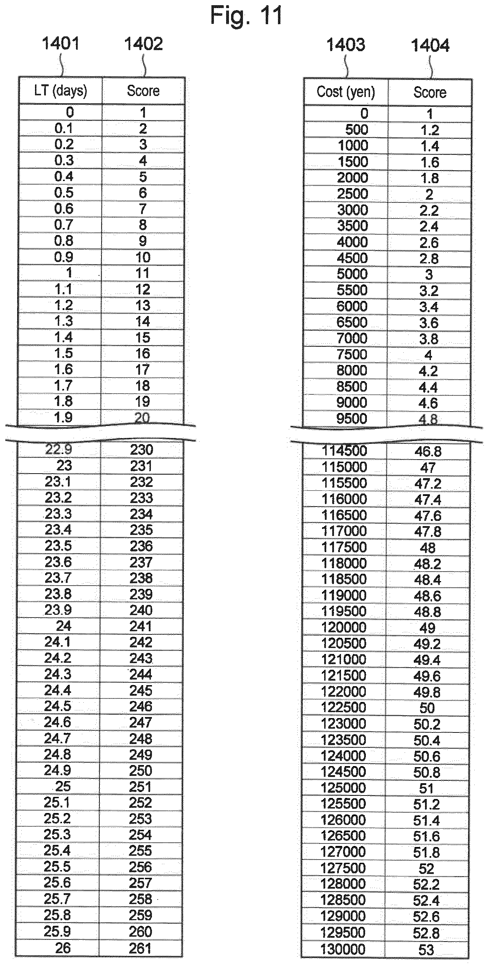

Fig. 11 shows an example of the score conversion information 417.

The score conversion information 417 includes the fields of manufacturing LT 1401 and its scores 1402, and of parts manufacturing cost 1403 and its scores 1404. The field of manufacturing LT 1401 is the same as the manufacturing LT 1303 shown in Fig. 10, and contains the lead time (LT), that is, the number of days when the maintenance part is manufactured by outsourcing or in-house production. The field of scores 1402 contains the score for each lead time (LT). The field of parts manufacturing cost 1403 is the same as the manufacturing cost 1304 shown in Fig. 10, and contains the cost (yen) of manufacturing the item stored in the field of items 1301 by outsourcing or in-house production as specified in the manufacturing categories 1302. The field of scores 1404 contains the score for each manufacturing cost. The scores 1402 of the manufacturing LT 1401 are set to increase as the lead time increases, and the scores 1404 of the parts manufacturing cost 1403 are set to increase as the cost increases.

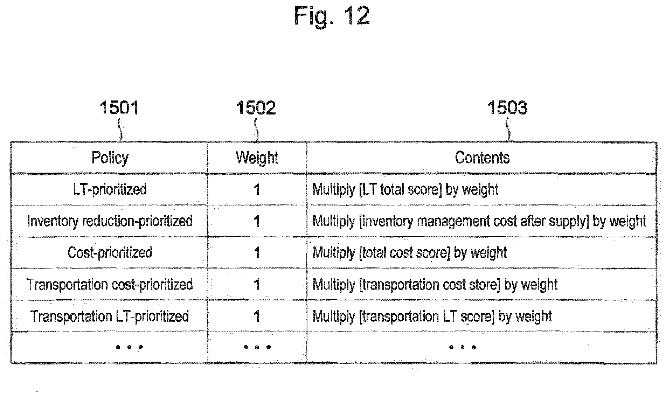

Fig. 12 shows an example of the weight information 418.

The weight information 418 includes the fields of policy 1501, weight 1502, and contents 1503. The field of policy 1501 contains the priorities for the supplying method. For instance, this field contains a LT-prioritizing policy that emphasizes shorter manufacturing lead time, an inventory reduction-prioritizing policy that emphasizes reduced inventory, a cost-prioritizing policy that emphasizes lower manufacturing cost, a transportation cost-prioritizing policy that emphasizes lower transportation cost, and a transportation LT-prioritizing policy that emphasizes shorter transportation lead time.

The weight 1502 indicates the degree of priority on cost and lead time, and is set in advance. The field of weight 1502 contains a value for each policy 1501, with 0 being the minimum value and 1 being the maximum value. The field of contents 1503 contains information about which item is to be weighted. For example, if the policy 1501 prioritizes LT, the "total LT score" is multiplied by the value of weight 1502. If the policy prioritizes reduced inventory, "inventory management cost after supply" is multiplied by the value of weight 1502. If the policy prioritizes cost, "total cost score" is multiplied by the value of weight of 1502. If the policy 1501 prioritizes transportation cost, the "transportation cost score" is multiplied by the value of weight 1502. If the policy prioritizes transportation LT, the "transportation LT score" is multiplied by the value of weight 1502. The weight is not limited to a fixed value. For instance, it may be set as a temporary value at first and corrected to an appropriate value using feedback or AI. For instance, the weights may be feedback-corrected according to the difference between the predetermined policy and the cost and lead time.

### (Data calculation section 421)

Referring back to Fig. 4, when calculating the supply methods, the data calculation section 421 extracts a plurality of supply methods that differ in supply bases and supply means as candidates. Then, the data storage section 421 calculates the score for each candidate using the data such as lead time and cost stored in the data storage section 410 for these multiple candidate supply methods. Then, the data calculation section 421 compares the scores of the candidates to determine the priority of these candidates.

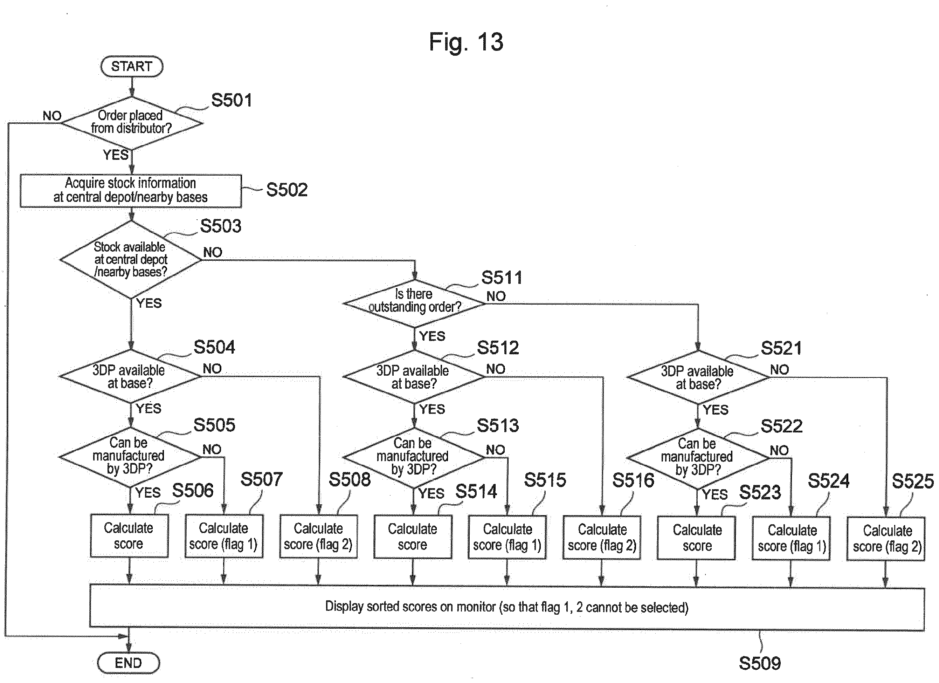

Fig. 13 is a flowchart explaining an example of processing executed by the calculation section 420 of the supply method determination device.

First, when an order for maintenance parts is placed by a service base such as a regional depot 103 or a distributor 104 (YES in S501), a process is performed to acquire inventory information at the central depot 102 and service bases near the order base (hereinafter called nearby service bases) (S502). Then, the presence or absence of the maintenance parts in stock at the nearby service bases is checked, and if there is a part in stock (YES in S503), a determination is made which one of the plurality of service bases are equipped with a 3D printer (S504). Service bases that are targets for the determination whether or not they are equipped with 3D printers include not only nearby service locations but also the order base. Thus, the order base is included in the service bases that are targets for the determination whether or not they are equipped with a 3D printer. This can be used for the determination whether or not to install a 3D printer at the order base in the future.

If any of the service bases is equipped with a 3D printer (YES in S504), a determination is made whether the maintenance parts ordered by the order base can be manufactured using the 3D printer, that is, whether the maintenance parts ordered by the order base can be manufactured by the 3D printer equipped at any of the service bases.

If it is determined that the maintenance parts ordered by the order base are parts that can be manufactured using the 3D printer (YES in S505), the data stored in the data storage section 410 is used to convert the number of days (lead time LT) to supply the maintenance parts from any service base to the order base and the total cost into scores and calculate the total score (S506).

For instance, the cost and lead time for transporting a predetermined number of products from one of a plurality of service bases that have the products in stock to the supply base are calculated and scored, and the total score is calculated. The cost and lead time for manufacturing a predetermined number of products at a base equipped with a 3D printer among the plurality of service bases and transporting them to the order base also are calculated and scored, and the total score is calculated.

If multiple supply bases or means of supply are available, each of them is considered a candidate supply method, and the total score is calculated for each of these multiple candidate supply methods. Then, the total scores of these candidates are compared with each other to assign a priority to each candidate, and the sorted scores are displayed on the monitor screen of the supply method determination device 401 (S509). Information on these multiple supply method candidates, the total score of each candidate, and the priority order is transmitted from the supply method determination device 401 to the user terminal at the order base. The user terminal at the order base displays the plurality of supply method candidates in the order of priority, and the user is allowed to select a desired supply method from among the plurality of supply method candidates by operating the user terminal.

If it is determined that the parts cannot be manufactured using a 3D printer (NO in S505), the total score is calculated by the same process as in S506, and the information of flag 1 is attached to the calculation result (S507). If none of the service bases are equipped with a 3D printer (NO in S504), the total score is calculated as in S506, and information of flag 2 is attached to the calculation result (S508). These calculation results with information of flag 1 or flag 2 attached are displayed on the user terminal, but the method using a 3D printer cannot be selected as the supply method.

If it is determined in S503 that there is no inventory at nearby service bases (NO in S503), determination is made for the presence or not of an outstanding order (S511). The presence or not of an outstanding order is determined based on the information stored in the field of inventory category 806 of the inventory information 411 in the data storage section 410. Then, if there is an outstanding order (YES at S511), the process shifts to S512 to S516, and the same processing as S504 to S508 is performed. If it is determined that there is no outstanding order in S511 (NO in S511), the process shifts to S521 to S525 and the same process as S504 to S508 is performed.

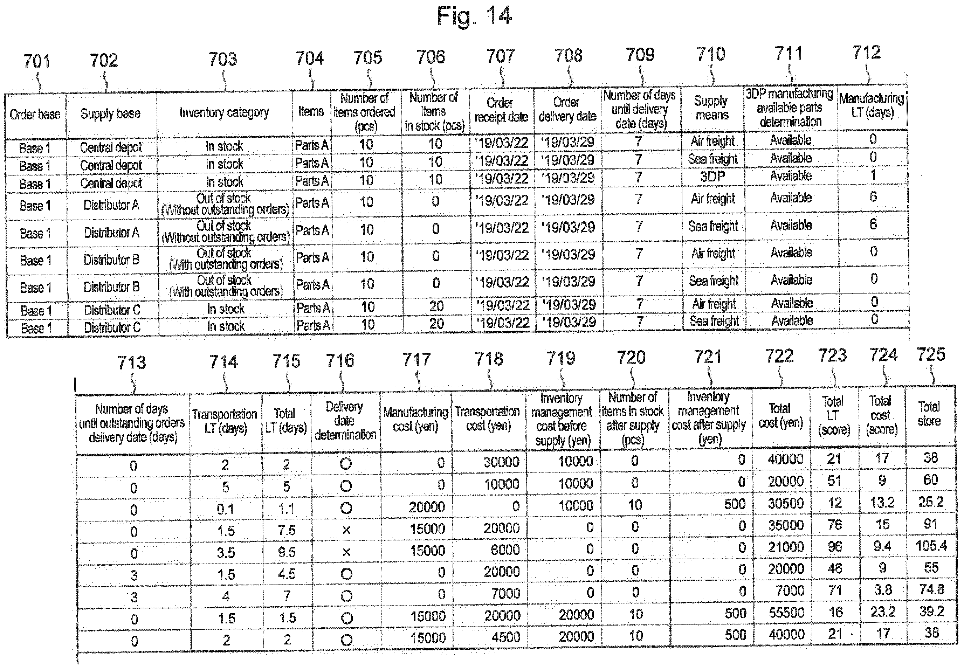

Fig. 14 shows an example of a calculation sheet used in the calculation section.

The calculation sheet includes the fields of order base 701, supply base 702, inventory category 703, items 704, number of items ordered (pcs) 705, number of items in stock (pcs) 706, order receipt date 707, order delivery date 708, number of days until delivery date (days) 709, supply means 710, 3DP manufacturing available parts determination 711, manufacturing LT (days) 712, the number of days until the outstanding orders delivery date (days) 713, transportation LT (days) 714, total LT (days) 715, delivery date determination 716, manufacturing cost (yen) 717, transportation cost (yen) 718, inventory management cost before supply (yen) 719, the number of items in stock after supply (pcs) 720, inventory management cost after supply (yen) 721, total cost (yen) 722, total LT (score) 723, total cost (score) 724, and total score 725.

The total LT (days) 715 is the sum of the manufacturing LT (days) 712, the number of days until the outstanding orders delivery date (days) 713, and the transportation LT (days) 714. The total LT (score) 723 is a value obtained by converting the total LT (days) 715 into a score using the score conversion information 417 in the data storage section 410. The total cost (yen) 722 is the sum of the manufacturing cost (yen) 717, the transportation cost (yen) 718, the inventory management cost before supply (yen) 719, and the inventory management cost after supply (yen) 721. The total cost (score) 724 is a value obtained by converting the total cost (yen) 722 into a score. The total score 725 is then calculated by summing the total LT (score) 723 and the total cost (score) 724. The total score 725 may be calculated by multiplying each of the total LT (score) 723, total cost (score) 724, and total cost (yen) 722 by a predetermined weight (see Fig. 12) according to the policy.

Figs. 15 and 16 show an example of supply methods displayed on the display section at a service base where the order was placed.

The output section 430 transmits the supply methods of a certain part to the user terminal at the order base in response to a request from the user terminal. The same result displayed on the user terminal at the order base is also displayed on the screen display section 440 of the supply method determination device 401. The user terminal of the order base displays information including recommended supply bases for supplying ordered parts to the order base using the supply method determination system in the order of priority.

Fig. 15 shows an example in which the orderer's service base is a group company. The supply methods shown in Fig. 15 include information of priority 601, supply base 602, supply means 603, number of days required for supply (days) 604, and cost required for supply (yen) 605. A user of the group company can select the best supply method from among these multiple supply methods by operating the user terminal at their own service base. For instance, the user can select a method at the first priority that is the method with the shortest number of days (days) 604 required for supply, or the method at the sixth priority that is the cheapest method with the cost (yen) 605 required for supply.

Fig. 16 shows an example in which the orderer's service base is another company. The supply method shown in Fig. 16 includes information of priority 611, supply base 612, supply means 613, delivery date (date) 614, and wholesale price (yen) 615. A user of another company can operate the user terminal of their own service base to select the optimum supply method from among these multiple supply methods. For instance, the user can select a method at the first priority that is the method with the closest delivery date (date) 614 and with the cheapest wholesale price (yen), or the method at the sixth priority that is the cheapest wholesale price (yen) 615.

The supply method determination system according to the present embodiment described above adds manufacturing of maintenance parts using a 3D printer at a service base as an option for the supply means in addition to transportation methods such as air freight and sea freight. Then, the user is allowed to set priorities to a plurality of supply method candidates in consideration of the number of days and cost required for supply. Weights may be assigned to the number of days and cost of supply, which enables the determination of the supply method to reflect the supplier's policy.

Thus, the user understands the number of days and cost of supply for each of the plurality of supply method candidates, and is able to shorten the lead time, reduce cost, and determine whether or not it is better not to carry new inventory. Then the user is able to select a desired candidate from among these multiple supply method candidates and determine it as the supply method.

That is a detailed description of the embodiments of the present invention. The present invention is not limited to the above-stated embodiments, and the design may be modified variously without departing from the spirits of the present invention. For instance, the entire detailed configuration of the embodiments described above for explanatory convenience is not always necessary for the present invention. A part of one embodiment may be replaced with the configuration of another embodiment, or the configuration of one embodiment may be added to the configuration of another embodiment. A part of the configuration of each embodiment may include another configuration that is added, or may be deleted or replaced with another configuration.

### Reference Signs List

- 1: Supply method determination system
- 101: Supplier
- 102: Central depot
- 103: Regional depot
- 104: Distributor
- 300: Communication network
- 301: Center Server
- 401: Supply method determination device
- 402, 403: User terminal
- 410: Data storage section
- 420: Calculation section
- 430: Output section
- 440: Screen display section
- 411: Inventory information
- 412: Order information
- 413: Transportation information
- 414: 3DP manufacturing information
- 415: 3DP holding base information (manufacturing apparatus information)
- 416: Parts manufacturing information
- 417: Score conversion information
- 418: Weight information

## Claims

1. A supply method determination device configured to determine a supply base that supplies a product to an order base from among a plurality of bases and determine a supply means that supplies the product from the supply base to the order base,
the supply method determination device storing inventory information indicating an inventory status of the product at the plurality of bases and manufacturing apparatus information indicating which of the plurality of bases has a manufacturing apparatus capable of manufacturing the product,
the supply method determination device calculating using the stored inventory information and manufacturing apparatus information: cost and lead time when transporting a predetermined number of the products from one of the plurality of bases where the product is in stock to the supply base; and cost and lead time when manufacturing a predetermined number of the products at a base equipped with the manufacturing apparatus among the plurality of bases and transporting the manufactured products to the order base, the supply method determination device determining a supply base and a supply means based on the calculated cost and lead time.

2. The supply method determination device according to claim 1, converting the cost and lead time into scores, calculating a total score by summing the score of the cost and the score of the lead time for each of the supply base and supply means, and comparing the calculated total scores, thus determining a supply base and a supply means.

3. The supply method determination device according to claim 2, storing a weight indicating the degree of priority for each of the cost and lead time, and
weighting the cost and the lead time using the weight.

4. The supply method determination device according to claim 3, storing information on manufacturing cost, transportation cost, inventory management cost after supply, manufacturing lead time, and transportation lead time for each supply base and supply means, and
converting each of the manufacturing cost, the transportation cost, the inventory management cost after supply, the manufacturing lead time, and the transportation lead time into a score, and multiplying each score by the weight for weighting.

5. The supply method determination device according to claim 4, feedback-correcting the weight based on a difference between a predetermined policy and the cost and lead time.

6. The supply method determination device according to claim 5, setting priorities of supply bases and supply means based on the total score.

7. A supply method determination system comprising a plurality of user terminals and a supply method determination device located in a server, the user terminals and the supply method determination device being connected via a network, each of the plurality of user terminals being located at a corresponding one of a plurality of bases, the supply method determination device being configured to determine a supply base that supplies a product to an order base from among the plurality of bases and determine a supply method that supplies the product from the supply base to the order base,
the supply method determination device storing inventory information indicating an inventory status of the product at the plurality of bases and manufacturing apparatus information indicating which of the plurality of bases has a manufacturing apparatus capable of manufacturing the product,
the supply method determination device calculating using the stored inventory information and manufacturing apparatus information: cost and lead time when transporting a predetermined number of the products from one of the plurality of bases where the product is in stock to the supply base; and cost and lead time when manufacturing a predetermined number of the products at a base equipped with the manufacturing apparatus among the plurality of bases and transporting the manufactured products to the order base, the supply method determination device determining a supply base and a supply method based on the calculated cost and lead time, and
outputting information on the determined supply base and supply method to the user terminal of the order base,
the user terminal displaying information on the supply base and supply method output from the supply method determination device.
